# EUROPEAN PATENT SPECIFICATION

(11) **EP 0 448 496 B1**
(45) Date of publication and mention of the grant of the patent: **26.04.2000**
(21) Application number: 91480029.7
(22) Date of filing: 21.02.1991
(51) Int. Cl.: G06F 3/033

(54) **Dynamic selective correlation of graphic entities**
Dynamische selektive Korrelation von graphischen Objekten
Corrélation sélective dynamique d'objets graphiques

(30) Priority: 12.03.1990 US 492510
(43) Date of publication of application: 25.09.1991
(73) Proprietor: International Business Machines Corporation, Armonk, N.Y. 10504 (US)
(72) Inventor: Fedak, John Frederick, Boulder, Colorado 80304 (US); Hicke, Jeffrey Alan, Boulder, Colorado 80304 (US); Lascelles, Martin Christopher, Boulder, Colorado 80304 (US); Sherman, Stephen Paul, Boulder, Colorado 80302 (US); Wong, Michael, Longmont, Colorado 80501 (US)
(74) Representative: de Pena, Alain

(56) References cited:
- EP-A- 0 215 203
- US-A- 4 754 267
- IBM TECHNICAL DISCLOSURE BULLETIN vol. 32, no. 8B, January 1990, NEW YORK US page 231 'PRE-SELECTION HIGHLIGHTING'

## Description

### Background of the Invention

This invention relates to selection of a displayed image using a cursor and particularly to energizing a display element to which the control by an input device is directed.

In CAD (Computer Aided Drafting -- or Design) graphic applications, a cursor is used to select entities on a display screen. The selected entity, e.g., a shape such as a box or circle or line, is then highlighted to show the user which entity has been selected. The user can move the cursor about until the desired shape is high-lighted by changing color, intensity, blinking, or altering some other attribute of the selected shape or entity.

Some CAD functions apply only to certain types of entities. For example, when it is desired to modify text, the text to be modified must be selected. Selection of other entities, such as shapes, results in an error message being displayed to the user that an improper entity has been selected, requiring the user to reset the message and select the correct entity, in this case text. The generation and cancellation of the error message and subsequent selection of another entity reduce the productivity of the user.

U.S. Patent 4,516,266 discloses graphics entity detection independent from the image generation. Using a light pen to select a pixel (picture element or dot making up the raster display), the shape of which the pixel is part of can be ascertained and highlighted. This is accomplished by monitoring identifying signals provided with the data being sent serially from storage to the display device. Such identifying signals are associated with the features or entities of which the data is a part.

U.S. Patent 4,742,473 discloses a system for facilitating interaction with a CAD system by allowing the user to select one of a plurality of processing modes from a menu. The input device is a digital tablet and the display has two areas. Alphanumeric data is displayed on a status screen and a cursor controlled by the digital tablet is monitored by a computer which detects when the cursor moves between the graphics work space and the menu region. In response to such determination, the computer displays on the status screen the modes available for selection when entering the menu region and substitutes a mode-dependent status display when the cursor enters the graphic work space.

Present systems select the correlated entity and highlight it for verification before determining whether it is the correct type of entity for the function being executed. As noted above, this wastes time and requires the user to perform extra operations to restart the selection process.

### Summary of the Invention

The invention provides a method for selecting a displayed graphic entity in a computer implemented drafting system as defined in appended claim 1, a method to determine a correct entity on which to perform a selected one of a plurality of shape type dependent operations as defined in appended claim 4, and a computer implemented drafting system according appended claim 7.

In accordance with the invention, a display image is selected e.g., using a cursor, for editing by an editing operation that applies only to certain types of images. The certain type of image is an operation attribute, i.e., specified as part of the operation. When the cursor selects an image, its type attribute is checked. If it is the same as the certain type specified by the operation, then the image is highlighted for verification by the user. If it is not the same, then the image is not high-lighted and the user must select another image or the system can select the next nearest shape.

The invention eliminates the need for error messages by associating the type of entity required by the function with the entity correlated with the cursor. If not the same, then the correlated entity is not highlighted and the user moves the cursor until an entity is highlighted, ensuring that the selected entity is the proper for the function. That is, if text is to be modified, then only correlated text entities will be selected and high-lighted.

Another useful application of the invention is in GIS applications (Geographic Information Systems). For example, a public utility company user may want to connect power distribution lines to insulators on poles. This would re-quire the user to select successive points on the display with the cursor to indicate the sequence and place for the wire to be connected. The invention can prevent the user from inadvertently connecting the wire to trees, houses, sign-posts, and other points or objects that appear on the display.

### Brief Description of the Drawings

The invention is described in detail by referring to the various figures which illustrate specific embodiments of the invention, and wherein like numerals refer to like elements.
FIG. 1 is a illustration of an application of the invention.
FIG. 2 is a flowchart depicting the operation of the invention.
FIG. 3 is an example of a type of database record useful in implementing the invention.

### Description of the Preferred Embodiment

The embodiment of the described invention can be in the form of a subroutine. Subroutines are computer program modules that are not placed directly in the stream of instructions in which they are used. Subroutines are invoked by call and link procedures which cause the program execution to transfer to the list of computer instructions comprising the subroutine program and to link or to supply the operands used by the subroutine. When a subroutine has completed execution, the program control returns to the instruction in the calling program following that which called the subroutine.

In the following description, references are made to the flowcharts depicting the sequence of operations performed by the program. The symbols used therein are standard flowchart symbols accepted by the American National Standards Institute and the International Standards Organization. In the explanation, an operation may be described as being performed by a particular block in the flowchart. This is to be interpreted as meaning that the operations referred to are performed by programming and executing a sequence of instructions that produces the result said to be performed by the described block. The actual instructions used depend on the particular hardware used to implement the invention. Different processors have different instruction sets but the person of ordinary skill in the art is familiar with the instruction set with which he works and can implement the operations set forth in the blocks of the flowchart.

Highlighting, as used in this specification, means to cause a selected entity to stand out from the surrounding entities on a display by changing its color, increasing or decreasing its intensity, blinking, reverse video, or the like.

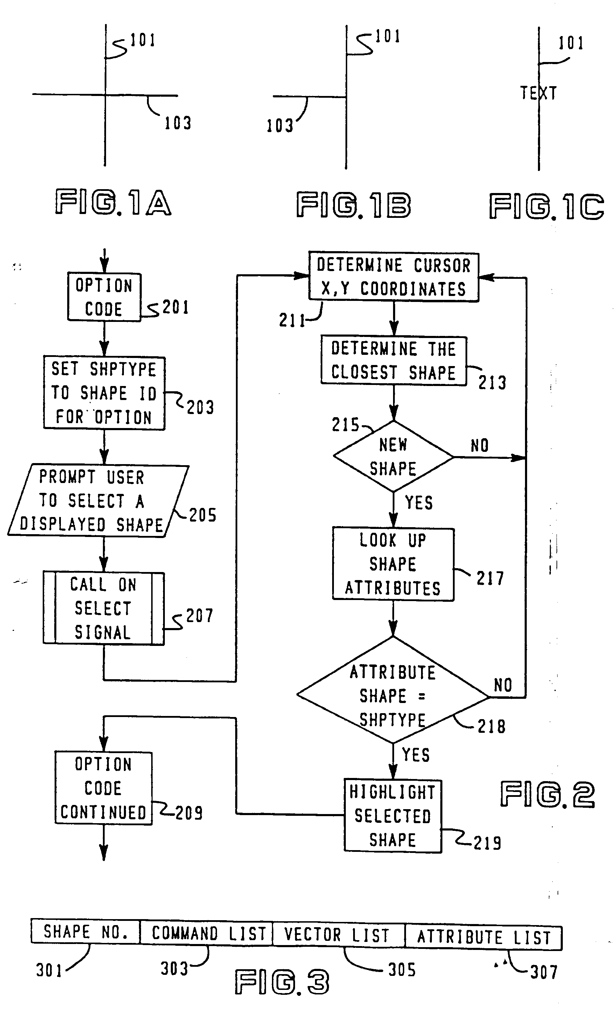

In CAD applications, as well as in other computer graphics applications, editing commands are provided to operate on the graphic entities. For example, a TRIM function may be supplied for cutting off a line crossing another line so that the crossing line is terminated at the crossed line. FIG. 1A shows a crossed line 101 and a crossing line 103. When the trim function is selected by the user, a prompt is displayed such as SELECT TARGET LINE. In response to the prompt, the user can move a cursor to a desired target line, in this example, the crossed line 101 which is highlighted for verification. The user presses a button to select the highlighted target, or crossed line 101.

The system then supplies a prompt SELECT LINE TO BE TRIMMED. In response, the user moves the cursor to the crossing line 103 and, when it is highlighted, presses a button to select it. (In the example, the part of the crossing line on the side of the crossed line -- here the right side -- selected by the cursor is trimmed.)

FIG. 1B shows the displayed lines after the operation is completed. The crossing line 103 terminates at the crossed line 101.

If, however, as shown in FIG. 1C, the text is selected in response to the second prompt, the function cannot be performed because text truncation is not allowed. When the text is highlighted in response to the second prompt for verification, and is selected by the user's button, the system attempts truncation only to determine that the selected shape was text. The system then supplies an error message that the incorrect shape was selected.

The invention performs the sequence in a different order. When the cursor is on or near the text shape as the shape to be trimmed, the shape type is checked before highlighting to determine whether it is an acceptable choice. If not, then the text is not highlighted for verification and the user must move the cursor until a proper response shape is high-lighted.

Feedback to the option code is not done automatically when a correct entity is highlighted because the highlighted entity may not be the correct entity although of the same type. Feedback to the option is supplied only when the user signals, e.g., by pressing a button, when the high-lighted entity is acceptable.

A flowchart of the embodiment of the invention is shown in FIG. 2. A processing block 201 represents that an option code, i.e., a command or function, is being executed. In a processing block 203, a variable, SHPTYPE, is set to a shape type or some identification corresponding to the type of shape on which the option code operates. SHPTYPE can also include several shape types when the option applies to more than one type of shape.

An input/output block 205 prompts the user to select a displayed shape. When the shape is selected by the user generating a select signal, a subroutine block 207 represents that a subroutine is called. In the subroutine, a process block 211 determines the X,Y coordinates of the cursor. A process block 213 shows that the cursor location is correlated to the closest shape to the location of the cursor.

A decision block 215 determines whether this is a new shape or whether it had been previously selected during the subroutine. If it is not a new shape, the program returns to the process block 211 to check the next closest shape. If it is a new shape, the attributes of the selected shape are determined, such as by accessing a database record, as represented by a process block 217.

A decision block 218 determines whether the type of the selected shape is the same as the SHPTYPE variable. If not, the program moves to the output block 216 to cause another shape to be selected. Otherwise, the selected shape is highlighted as shown in process block 219 and the subroutine program returns to the option code as indicated by the process block 209. The decision block 218 may compare the attribute shape to several shape types included in SHPTYPE when the latter applies to more than one type of shape.

The above-described process is repeated after the user has been prompted to select another shape or when the next closest shape is selected.

A preferred implementation of the processes shown in the process blocks 211 and 213 are described in detail in U.S. patents 4,731,609 and 4,754,267, incorporated herein by reference.

A typical record entry for a database associated with the system being described is shown in FIG. 3. The first field is a shape number 301 which correlated to a selected display shape number. Next, a command list 303 is stored which can possibly contain several operations such as plot. Next, a vector list 305 is supplied which indicates the X,Y locations of lines and other data required to plot the shape. An attribute list 307 contains information as to the color of the shape, the shape type, whether the shape is filled, and so on.

When a shape is to be highlighted by changing the color, the color attribute of the attribute list 307 is changed and the shape is redrawn.

Similarly, by accessing such a record, the shape type can be retrieved from the attribute list 307.

While the invention has been particularly shown and described with reference to a preferred embodiment thereof, it will be understood by those skilled in the art that various changes and modifications in form and details may be made therein without departing from the scope of the invention according to the following claims.

## Claims

1. A method for selecting a displayed graphic entity in a computer implemented drafting system wherein the definitions of graphic entities include identification of type of shapes comprising the steps of:
specifying a shape-type dependent operation to be applied to a displayed graphic entity;
moving a cursor about a display screen in response to user controlled input signals;
correlating coordinates of the cursor with coordinates of a displayed graphic entity closest to the cursor;
determining whether the shape type of the displayed graphic entity closest to the cursor is the same as the shape type of said specified operation; and
highlighting a display characteristic of said displayed graphic entity closest to the cursor if the shape types are determined to be the same.

2. The method of claim 1 wherein the highlighted display characteristic is the intensity of the displayed graphic entity.

3. The method of claim 1 wherein the highlighted display characteristic is the color of the displayed graphic entity.

4. A method to determine a correct entity on which to perform a selected one of a plurality of shape type dependent operations in a graphics system having a display for displaying graphic entities comprising types of shapes including text and lines, and having a user moveable cursor positionable on the display, the method comprising the steps of:
selecting a displayed entity closest to said cursor;
comparing the shape type of a selected displayed entity to the shape type associated with said selected operation;
highlighting the displayed selected entity if is the compared shape types are the same; or
reselecting a displayed entity next closed to said cursor if the compared shape types are not the same; and
repeating said comparing and reselecting steps until compared shape types are the same.

5. The method of claim 4 wherein said highlighting step includes a step of changing the intensity of the displayed selected entity.

6. The method of claim 4 wherein said highlighting step includes a step of changing the color of the displayed selected entity.

7. A computer implemented drafting system comprising in combination:
means for displaying graphic entities, each of said entities being one of a plurality of shape types;
cursor means positionable by a user for selecting one of a plurality of shape-dependent drafting operations and for indicating which of said graphic entities being displayed on said displaying means a selected operation is to be applied to;
means for determining which of a plurality of displayed graphic entities is closest to said cursor's position;
means for comparing the shape type on which a selected operation is to be executed with the shape type of the displayed entity closest to said cursor's position;
means responsive to said comparing means when said compared shape types are different for selecting successive displayed graphic entities in order of increasing distances from said cursor means until said comparing means indicates the compared shape types are the same; and
means responsive to said comparing means when said compared shape types are the same for highlighting an attribute of the selected displayed graphic entity.

8. The system of claim 7 wherein the attribute highlighted by the highlighting means is the intensity of said selected displayed graphic entity.

9. The system of claim 7 wherein the attribute highlighted by the highlighting means is the color of said selected displayed graphic entity.

## Patentansprüche

1. Verfahren zum Auswählen einer angezeigten grafischen Einheit in einem im Computer eingebauten Entwurfssystem, bei dem die Definitionen der grafischen Einheiten eine Kennzeichnung des Typs der Formen enthalten, das die folgenden Schritte umfasst:
Kennzeichnen einer formtypabhängigen Operation, die auf eine angezeigte grafische Einheit angewendet werden soll;
Bewegen eines Cursors über einen Bildschirm als Antwort auf benutzergesteuerte Eingabesignale;
Korrelieren von Koordinaten des Cursors mit Koordinaten einer angezeigten grafischen Einheit nächst dem Cursor;
Feststellen, ob der Formtyp der angezeigten grafischen Einheit nächst dem Cursor derselbe wie der Formtyp der gekennzeichneten Operation ist; und
Hervorheben eines Bildschirmmerkmals der angezeigten grafischen Einheit nächst dem Cursor, wenn die Formtypen als dieselben festgestellt wurden.

2. Verfahren nach Anspruch 1, wobei das hervorgehobene Bildschirmmerkmal die Intensität der angezeigten grafischen Einheit ist.

3. Verfahren nach Anspruch 1, wobei das hervorgehobene Bildschirmmerkmal die Farbe der angezeigten grafischen Einheit ist.

4. Verfahren zum Feststellen einer richtigen Einheit, auf der eine ausgewählte einer Vielzahl von formtypabhängigen Operationen auszuführen ist, in einem Grafiksystem mit einem Bildschirm zum Anzeigen grafischer Einheiten,
die Typen von Formen mit Text und Linien umfassen, und mit einem durch den Benutzer zu verschiebenden Cursor, der auf dem Bildschirm zu positionieren ist, wobei das Verfahren die folgenden Schritte umfasst:
Auswählen einer angezeigten Einheit nächst dem Cursor;
Vergleichen des Formtyps einer ausgewählten angezeigten Einheit mit dem der ausgewählten Operation zugeordneten Formtyp;
Hervorheben der angezeigten ausgewählten Einheit, wenn die verglichenen Formtypen dieselben sind; oder
Neuauswählen einer angezeigten Einheit zweitnächst dem Cursor, wenn die verglichenen Formtypen nicht dieselben sind; und
Wiederholen der Vergleichs- und Neuauswahlschritte, bis die verglichenen Formtypen dieselben sind.

5. Verfahren nach Anspruch 4, wobei der Schritt des Hervorhebens einen Schritt des Änderns der Intensität der angezeigten ausgewählten Einheit enthält.

6. Verfahren nach Anspruch 4, wobei der Schritt des Hervorhebens einen Schritt des Änderns der Farbe der angezeigten ausgewählten Einheit beinhaltet.

7. Im Computer ausgeführtes Entwurfssystem, das in Kombination folgendes umfasst:
Mittel zum Anzeigen grafischer Einheiten, wobei jede der Einheiten einer von einer Vielzahl von Formtypen ist;
Cursormittel, das durch einen Benutzer zu positionieren ist, um eine aus einer Vielzahl von formabhängigen Entwurfsoperationen auszuwählen und um anzuzeigen, auf welche der grafischen Einheiten, die auf dem Anzeigemittel angezeigt werden, eine ausgewählte Operation angewendet werden soll;
Mittel zum Feststellen, welche einer Vielzahl angezeigter grafischer Einheiten der Position des Cursors am nächsten ist;
Mittel zum Vergleichen des Formtyps, auf dem eine ausgewählte Operation ausgeführt werden soll, wobei sich der Formtyp der angezeigten Einheit am dichtesten an der Position des Cursors befindet;
Mittel, die auf das Vergleichsmittel reagieren, wenn die verglichenen Formtypen verschieden sind, um aufeinanderfolgend angezeigte grafische Einheiten in der Reihenfolge sich vergrößernder Abstände von dem Cursormittel auszuwählen, bis das Vergleichsmittel anzeigt, dass die verglichenen Formtypen dieselben sind; und
Mittel, die auf das Vergleichsmittel reagieren, wenn die verglichenen Formtypen dieselben sind, um ein Attribut der ausgewählten angezeigten grafischen Einheit hervorzuheben.

8. System nach Anspruch 7, wobei das durch das Hervorhebemittel hervorgehobene Attribut die Intensität der ausgewählten angezeigten grafischen Einheit ist.

9. System nach Anspruch 7, wobei das durch das Hervorhebemittel hervorgehobene Attribut die Farbe der ausgewählten angezeigten grafischen Einheit ist.

## Revendications

1. Procédé pour sélectionner un objet graphique visualisé dans un système de dessin mis en oeuvre par ordinateur dans lequel les définitions des objets graphiques incluent l'identification du type des formes comprenant les étapes consistant à :
spécifier une opération fonction du type de forme qui doit être appliquée à un objet graphique visualisé ;
déplacer un curseur autour d'un écran de visualisation en réponse à des signaux d'entrée commandés par l'utilisateur ;
corréler les coordonnées du curseur avec les coordonnées d'un objet graphique visualisé le plus proche du curseur ;
déterminer si le type de forme de l'objet graphique visualisé le plus proche du curseur est le même que le type de forme de ladite opération spécifiée ; et
surligner une caractéristique d'affichage dudit objet graphique visualisé le plus proche du curseur si les types de formes sont déterminés être les mêmes.

2. Procédé selon la revendication 1, dans lequel la caractéristique d'affichage surlignée est l'intensité de l'objet graphique visualisé.

3. Procédé selon la revendication 1, dans lequel la caractéristique d'affichage surlignée est la couleur de l'objet graphique visualisé.

4. Système graphique comportant un affichage pour visualiser des objets graphiques comprenant des types de formes incluant du texte et des lignes et comportant un curseur déplaçable par l'utilisateur positionnable sur l'affichage, dans un procédé pour déterminer un objet correct sur lequel effectuer des opérations sélectionnées parmi une pluralité d'opérations fonction du type de forme, le procédé comprenant les étapes consistant à :
sélectionner un objet visualisé le plus proche dudit curseur ;
comparer le type de forme de l'objet visualisé sélectionné au type de forme associé à ladite opération sélectionnée ;
surligner l'objet sélectionné visualisé si les types de formes comparés sont les mêmes ; ou
resélectionner un objet visualisé suivant le plus proche dudit curseur si les types de formes comparés ne sont pas les mêmes ; et
répéter lesdites étapes de comparaison et de resélection jusqu'à ce que les types de formes comparés soient les mêmes.

5. Procédé selon la revendication 4, dans lequel ladite étape de surlignement inclut une étape consistant à changer l'intensité de l'objet sélectionné visualisé.

6. Procédé selon la revendication 4, dans lequel ladite étape de surlignement inclut une étape consistant à changer la couleur de l'objet sélectionné visualisé.

7. Système de dessin mis en oeuvre par ordinateur comprenant en combinaison :
un moyen pour visualiser des objets graphiques, chacun desdits objets étant un objet parmi une pluralité de types de formes ;
un moyen de curseur positionnable par un utilisateur pour sélectionner une opération parmi une pluralité d'opérations de dessin fonction de la forme et pour indiquer auquel desdits objets graphiques visualisé sur ledit moyen d'affichage on doit appliquer une opération sélectionnée ;
un moyen pour déterminer lequel d'une pluralité d'objets graphiques visualisés est le plus proche de ladite position de curseur ;
un moyen pour comparer le type de forme sur lequel l'opération sélectionnée doit être exécutée avec le type de forme de l'objet visualisé le plus proche de ladite position de curseur ;
un moyen sensible audit moyen de comparaison lorsque les types de formes comparés sont différents pour sélectionner des objets graphiques visualisés successifs dans l'ordre des distances croissantes à partir dudit moyen de curseur jusqu'à ce que ledit moyen de comparaison indique que les types de formes comparés sont les mêmes ; et
un moyen sensible audit moyen de comparaison lorsque lesdits types de formes comparés sont les mêmes pour surligner un attribut d'un objet graphique visualisé sélectionné.

8. Système selon la revendication 7, dans lequel l'attribut surligné par le moyen de surlignement est l'intensité dudit objet graphique visualisé sélectionné.

9. Système selon la revendication 7, dans lequel l'attribut surligné dans le moyen de surlignement est la couleur dudit objet graphique visualisé sélectionné.
